# EUROPEAN PATENT SPECIFICATION

(11) **EP 0 539 952 B1**
(45) Date of publication and mention of the grant of the patent: **03.01.1996**
(21) Application number: 92118432.1
(22) Date of filing: 28.10.1992
(51) Int. Cl.: C09K 5/04

(54) **Working fluid containing propane**
Propan enthaltendes Treibmittel
Fluide moteur contenant du propane

(30) Priority: 28.10.1991 JP 281035/91
(43) Date of publication of application: 05.05.1993
(73) Proprietor: MATSUSHITA ELECTRIC INDUSTRIAL CO., LTD., Kadoma-shi, Osaka-fu, 571 (JP)
(72) Inventor: Yoshida, Yuji, Itami-shi (JP); Funakura, Masami, Hirakata-shi (JP); Nakatani, Kazuo, Kadome-shi (JP); Tagashira, Minoru, Hirakata-shi (JP)
(74) Representative: Patentanwälte Leinweber & Zimmermann

(56) References cited:
- EP-A- 0 299 614
- EP-A- 0 402 937
- EP-A- 0 419 042
- WO-A-92/01762
- WO-A-92/11338
- WO-A-92/16597
- DATABASE WPIL Week 8824, Derwent Publications Ltd., London, GB; AN 88-165828 & JP-A-63 105 088.
- K.Takemasa "Japan refrigeration association symposium",13-11-1992, Osaka, pages 23-27.

## Description

### BACKGROUND OF THE INVENTION

### 1) Field of the Invention

The present invention relates to a working fluid which is used in heat-pumps of air conditioners, refrigerators, and the like as well as to a heat-pump using the same.

### 2) Description of the Related Art

Heretofore, halogenated hydrocarbons derived from methane or ethane called fluorinated halocarbons (hereinafter referred to as ROO or ROOO) have been known as working fluids for heat pumps of air conditioners, refrigerators and the like, where their utilization temperatures range from about 0° to about 50°C in terms of condensation temperature and/or evaporation temperature. Above them, chlorodifluoromethane (CHClF₂; R22; boiling point: -40.8°C) is widely used as a working fluid for home air conditioners, air conditions for buildings, large scale refrigerators, etc.

Recently, depletion of the ozone layer in the stratosphere with the fluorinated halocarbon is seriously discussed as one of global environmental problems, and amounts to be used and produced of some fully halogenated chlorofluorocarbons (CFCs) which have a high ozone depletion potential are limited by the Montreal Protocol. In future, their use and production will be banned.

R22 has an ozone depletion potential (hereinafter referred to as "ODP") as much small as 0.05 when ODP of trichlorofluoromethane (CCl₃F, R11) is defined to be 1 (one). Though R22 is not a CFC, its production and use are expected to increase and it is expected that R22 will have significant influences on the human living in future, since the refrigerators and air conditioners have been now widely used. Therefore, it is highly desired to quickly develop a working fluid which has a small ODP and can be used as a substitute for R22 having a small ODP.

### SUMMARY OF THE INVENTION

An object of the present invention is to provide a working fluid comprising three kinds of hydrocarbons having a much less influence on the ozone layer in the stratosphere as a substitute for R22 in view of the above-mentioned problems.

U.S. Patent No. 4,810,403 to Bivens et al discloses a similar attempt as a substitute for dichlorodifluoromethane (CCl₂F₂, R12, boiling point of -29.8°C) where a working fluid comprising three kinds of fluorinated halocarbons, i.e. a first component having a boiling point at atmospheric pressure in the range of -50°C to -30°C, a second component having a boiling point at atmospheric pressure in the range of -30°C to -5°C and a third component having a boiling point at atmospheric pressure in the range of -5°C to 30°C, which has substantially the same vapor pressure as R12, is proposed. One example of the disclosed working fluid is a mixture of R22, R152a and R114.

EP-A-0419042 discloses a three-component mixture of R22 or R125, R125 or 218 and propane (R290) as a substitute for R502 (azeotrope of R115 and R22).

On the other hand, the present invention proposes a substitute for chlorodifluoromethane (CHClF₂, R22, boiling point of -40.8°C) and is distinguished from the US Patent not only in the object, but also in the composition of working fluid.

According to the present invention, there is provided a working fluid, which comprises three kinds of hydrocarbons, i.e. trifluoromethane (CHF₃) or pentafluoroethane (C₂HF₅) having a boiling point under the atmospheric pressure of not more than -40°C as a first component, propane (C₃H₈) having a boiling point under the atmospheric pressure of not more than -40°C as a second component, and tetrafluoroethane (C₂H₂F₄) or chlorotetrafluoroethane (C₂HClF₄) having a boiling point under the atmospheric pressure of -30°C to -10°C as a third component. That is, the present invention provides different specific combinations from those of the US Patent and specifies a composition range capable of giving a substantially equivalent vapor pressure to that of R22. In other words, the US patent provides a working fluid comprising three kinds of fluorinated halocarbons, i.e. a first component having a lower boiling point than that of R22 and second and third components having higher boiling points than that of R22 when observed from the viewpoint of R22, and is silent of the composition range capable of giving a substantially equivalent vapor pressure to that of R22 and excludes propane as the essential component of the present invention, whereas the present invention proposes a working fluid comprising three kinds of hydrocarbons, i.e. a fluorinated halocarbon having a lower boiling point under the atmospheric pressure than that of R22 as a first component, propane having a lower boiling point under the atmospheric pressure than that of R22 as a second component, and a fluorinated halocarbon having a higher boiling point under the atmospheric pressure than that of R22 as a third component. Besides the difference in combinations, the present invention specifies a composition range capable of giving a substantially equivalent vapor pressure to that of R22, as well as a heat pump using the same.

### DETAILED DESCRIPTION OF THE INVENTION

The object of the present invention can be attained by a working fluid according to claim 1 and a heat pump according to claim 12.

Propane (boiling point: -42°C, C₃H₈, ODP=0.0) is a low cost hydrocarbon consisting only of carbon atoms and hydrogen atoms in the molecular structure and has substantially no ODP and having a lower, but similar boiling point than that of R22 (boiling point: -40.8°C). Furthermore, it is known that propane is flammable, but can be made fairly non-flammable by adjusting the composition range of a mixture from about 0% by weight (for example, 0.1% by weight) to about 10% by weight, and substantially non-flammable by adjusting it from about 0% by weight (for example, 0.1% by weight) to about 6% by weight.

The first component according to claim 1 has no substantial ODP. The third component according to claim 1 is a fluorinated halocarbon containing hydrogen atom(s) in the molecular structure and has a very low ODP.

The working fluids according to claim 1 can provide mixtures having a boiling point equivalent to that of chlorodifluoromethane (R22).

The first component having a boiling point under the atmospheric pressure of not more than -40°C is one member selected from non-flammable trifluoromethane (CHF₃, ODP=0) and pentafluoroethane (C₂HF₅, ODP=O), and the third component having a boiling point under the atmospheric pressure of not less than -30°c is one member selected from non-flammable tetrafluoroethane (C₂H₂F₄, ODP=O), and chlorotetrafluoroethane (C₂HClF₂; ODP=0.02) which have boiling points of not more than -10°C and can readily form a near-azeotropic composition.

The working fluid according to claim 1 has an influence on the ozone layer in the stratsphere which can be much less than R22 or can be substantially zero.

Particularly, propane is flammable, but the first component of trifluoromethane or pentafluoroethane, and the third component of tetrafluoroethane or chlorotetrafluoroethane are non-flammable. Thus, the flammability of a mixture can be reduced by limiting the composition range of propane and by mixing propane with the first and third components. It is the first time to specify the composition range serving as a substitute for R22, as in the present invention.

In a specific composition range, the working fluid of the present invention has substantially the same vapor pressure as R22 in a utilization temperature range between about 0°C to about 50°C, for heat pumps in air conditioners, refrigerators, etc. and is suitable as a working fluid which can be used in presently used apparatuses as a substitute for R22.

The working fluid of the present invention is expected to have very small ODP particularly in the above-mentioned combination and specific composition range and very promising as a substitute for R22.

In addition, since the working fluid of the present invention is a non-azeotropic mixture, which comprises at least three component having similar boiling points of not more than -10°C and thus can readily form a near-azeotropic composition, and has a temperature gradient in the condensing and evaporating processes. Even in apparatuses based on an air source, a Lorenz cycle in which a temperature difference from a heat source is decreased can be made, and thus the working fluid of the present invention is expected to have a higher coefficient of performance (COP). Furthermore, propane is available at a low cost, and thus the cost of a mixture can be reduced and a oil-solubility of the working fluid components can be improved to increase the heat transfer performance.

Fluorinated halocarbons having a ozone depletion potential tend to have a larger global warming potential (hereinafter referred to as "GWP") as their ODP increases. Since the working fluid of the present invention comprises at least three kinds of only hydrocarbons having no substantial ODP or a very small ODP, its GWP may be substantially the same as or smaller than that of R22. Therefore, the working fluid of the present invention may have smaller influence on the global warming. Particularly, propane has a zero ODP and GWP of propane is regarded as substantially zero, as compared with fluorinated halocarbons. Chlorotetrafluoroethane as one member of the third component is reported to have a GWP, which is about one-third of that of R22. From this point of view, the working fluid of the present invention is useful.

### BRIEF DESCRIPTION OF THE DRAWINGS

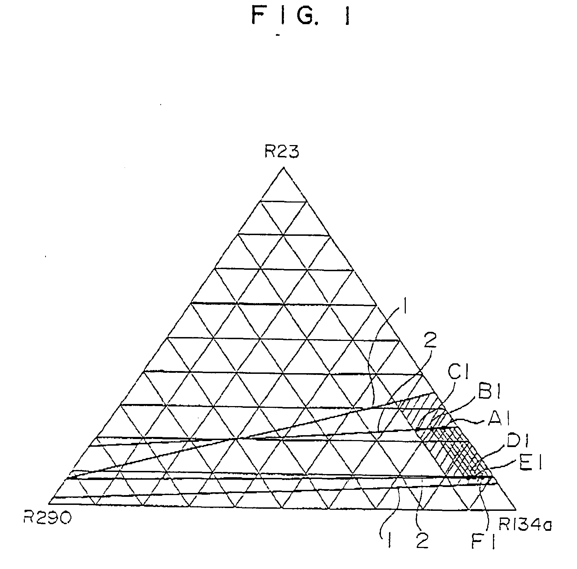

Figs. 1 to 8 each show a phase equilibrium diagram of a working fluid based on a mixture of three kinds of hydrocarbons at specific temperatures and specific pressures in a triangular coordinate, where numeral 1 is phase equilibrium lines (corresponding to R22 at 0°C), and 2 is phase equilibrium lines (corresponding to R22 at 50°C).

### PREFERRED EMBODIMENTS OF THE INVENTION

The present invention will be described in detail below, referring to embodiments of working fluids according to the present invention.

Fig. 1 shows a ternary composition diagram indicating equilibrium states of a mixture consisting of three kinds of hydrocarbons, i.e. trifluoromethane (R23), propane (R290) and 1,1,1,2-tetrafluoroethane (R134a) at specific temperatures under specific pressure in a triangular coordinate.

In the triangular coordinate, in the counterclockwise direction from the top vertex, single compounds are assigned on the vertexes from a compound having the lowest boiling point to one having the highest boiling pint. A composition (weight ratio) of the three compounds at one point on the triangular coordinate is expressed by a ratio of distances between said point and the opposite sides. The distance between said point and the opposite side corresponds to a proportion of the compound which is assigned to the vertex which faces said side.

In Fig. 1, the lines 1 are phase equilibrium lines of the mixture at 0°C under pressure of 497.9 kPa (4.044 kg/cmG). These temperature and pressure correspond to a saturated state of R22. The upper one of the phase equilibrium lines 1 (corresponding to R22 at 0°C) is a saturated vapor line, and the lower one is a saturated liquid line. In the area between these two lines, the mixture is in the phase equilibrium state. The lines 2 are phase equilibrium lines of the mixture at 50°C under pressure of 1943.2 kPa (18.782 kg/cmG). These temperature and pressure correspond to a saturated state of R22.

If R23 alone is used, it exceeds the critical temperature at 50°C. However, the mixture has the saturated state so that it can be used in heat pumps of air conditioners, refrigerators, etc. which have the utilization temperature range between about 0°C and about 50°C.

As obvious from Fig. 1, when the composition range of R290 is limited to about 0 to about 10% by weight, the mixture comprising about 5 to about 35% by weight of R23, about 0 to about 10% by weight of R290 and about 60 to about 95% by weight of R134a is preferred, since it has substantially the same vapor pressure as R22 in the utilization temperature range between about 0°C and about 50°C and is fairly non-flammable.Further, when the mixing range of R290 is limited to about 0 to about 6% by weight, the mixture comprising about 10 to about 25% by weight of R23, about 0 to about 65% by weight of R290 and about 70 to about 90% by weight of R134a is more preferred, since it has substantially the same vapor pressure as R22 at all the utilizing temperatures between 0°C and 50°C and is substantially non-flammable.

The compositions of the working fluids at the points A₁ to F₁ in Fig. 1 are shown in Table 1.

**Table 1**

| Point | A₁ | B₁ | C₁ | D₁ | E₁ | F₁ |
|---|---|---|---|---|---|---|
| R23 (wt. %) | 24.0 | 23.9 | 23.5 | 9.3 | 9.3 | 9.4 |
| R290 (wt.%) | 3.5 | 5.3 | 9.1 | 5.5 | 4.3 | 3.5 |
| R134a (wt.%) | 72.5 | 70.8 | 67.4 | 85.2 | 86.4 | 87.1 |

The points A₁, B₁ and C₁ are on the saturated vapor line of the phase equilibrium lines 2 (corresponding to R22 at 50°C), and the points, D₁, E₁ and F₁ are on the saturated liquid line of the phase equilibrium lines 2. Further, all of them are in the area between the saturated vapor line and the saturated liquid line of the phase equilibrium lines 1 (corresponding to R22 to 0°C). Therefore, the mixture is in the phase equilibrium state at 0°C under pressure of 497.9 kPa (4.044 kg/cmG) which correspond to the saturated state of R22.

Thus, the working fluid having the composition in Table 1 is in the saturated state or the phase equilibrium state under the saturated vapor pressure condition of R22 at 0°C and 50°C, so that, in the utilization temperature range between about 0°C and about 50°C, the working fluid has substantially the same condensation and evaporation temperatures as R22 when operated under the saturated vapor pressure of R22 at said temperatures.

In the above, the mixtures having the compositions on the phase equilibrium lines 2 (corresponding to R22 at 50°C) have been explained. In addition, when working fluids having compositions in the area inside the points A₁ to F₁, i.e. those having compositions which realize the phase equilibrium states at 0°C under pressure of 497.9 kPa (4.044 kg/cmG) and at 50°C under pressure of 1943.2 kPa (18.782 kg/cmG) (both corresponding to the saturated state of R22) are operated in the similar way to the above, condensation and evaporation temperatures which are substantially the same as those of R22 can be obtained in the utilization temperature range between about 0°C and about 50°C.

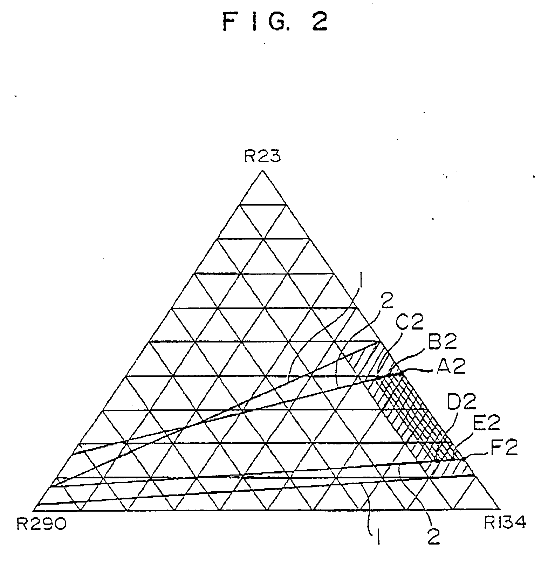

Fig. 2 shows a ternary composition diagram indicating equilibrium states of a mixture consisting of three kinds of hydrocarbons, i.e. R23, R290 and 1,1,2,2-tetrafluoroethane (R134) at specific temperatures under specific pressure in a triangular coordinate. In Fig. 2, the lines 1 are phase equilibrium lines of the mixture at 0°C under pressure of 497.9 kPa (4.044 kg/cmG), and the lines 2 are phase equilibrium lines of the mixture at 50°C under pressure of 1943.2 kPa (18.782 kg/cmG).

In that case, when the composition range of In that case, when the composition range of R290 is limited to about 0 to about 10% by weight, the mixture comprising about 10 to about 50% by weight of R23, about 0 to about about 10% by weight of R290 and about 45 to about 90% by weight of R134 is preferred, since it has substantially the same vapor pressure as R22 and is fairly non-flammable. Further, when the composition range of R290 is limited to about 0 to about 6% by weight, the mixture comprising about 15 to about 40% by weight of R23, about 0 to about 6% by weight of R290 and about 55 to about 85% by weight of R134 is more preferred.

The compositions of the working fluids at the points A₂ to F₂ in Fig. 2 are shown in Table 2.

**Table 2**

| Point | A₂ | B₂ | C₂ | D₂ | E₂ | F₂ |
|---|---|---|---|---|---|---|
| R23 (wt. %) | 40.8 | 40.4 | 39.3 | 14.7 | 15.0 | 15.1 |
| R290 (wt. %) | 0.3 | 1.9 | 5.6 | 5.5 | 1.9 | 0.3 |
| R134 (wt. %) | 58.9 | 57.7 | 55.1 | 79.8 | 83.1 | 84.6 |

The points A₂, B₂ and C₂ are on the saturated vapor line of the phase equilibrium lines 2 (corresponding to R22 at 50°C), and the points D₂, E₂ and F₂ are on the saturated liquid line of the phase equilibrium lines 2 (corresponding is R22 at 50°C). Further, all of them are in the area between the saturated vapor line and the saturated liquid line of the phase equilibrium lines 1 (corresponding to R22 at 0°C). Therefore, the mixture is in the phase equilibrium state at 0°C under pressure of 4.044 kg/cmG (corresponding to the saturated state of R22).

Thus, the working fluid having the composition in Table 2 is in the saturated state or the phase equilibrium state under the saturated vapor pressure condition of R22 at 0°C and 50°C, so that, in the utilization temperature range between about 0°C and about 50°C, the working fluid has substantially the same condensation and evaporation temperatures as R22 when operated under the saturated vapor pressure of R22 at said temperatures.

In the above, the mixtures having the compositions on the phase equilibrium lines 2 (corresponding to R22 at 50°C) have been explained. In addition, when working fluids having compositions in the area inside the points A₂ to F₂, i.e. those having compositions which realize the phase equilibrium states at 0°C under pressure of 497.9 kPa (4.044 kg/cmG) and at 50°C under pressure of 1943.2 kPa (18.782 kg/cmG) (both corresponding to the saturated state of R22) are operated in the similar way to the above, condensation and evaporation temperatures which are substantially the same as those of R22 can be obtained in the utilization temperature range between about 0°C and about 50°C.

From Figs. 1 and 2, it is understood that the mixture comprising about 5 to about 50% by weight trifluoromethane, about 0 to about 10% by weight of propane and about 45 to about 95% by weight of tetrafluoroethane is preferred, since it has substantially the same vapor pressure as R22 in the utilization temperature range between about 0°C and about 50°C and is fairly non-flammable. Further, the mixture comprising about 10 to about 40% by weight of trifluoromethane, about 0 to about 6% by weight of propane and about 45 to about 95% by weight of tetrafluoroethane is more preferred, since it has substantiallythe same vapor pressure as R22 at all the utilizing temperatures between 0°C and 50°C and is substantially non-flammable.

Since nonflammable trifluoromethane and tetrafluroethane are selected as fluorinated halocarbons having substantially no ODP, flammability of propane which is selected as a hydrocarbon having substantially no ODP can be suppressed.

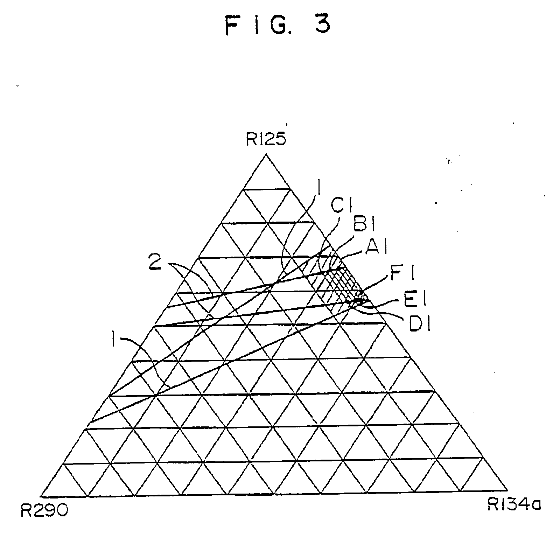

Fig. 3 shows a ternary composition diagram indicating equilibrium states of a mixture consisting of three kinds of hydrocarbons, i.e. pentafluoroethane (R125), propane (R290), and 1,1,1,2-tetrafluoroethane (R134a) at specific temperatures under specific pressure in a triangular coordinate.

In Fig. 3, the lines 1 are phase equilibrium lines of the mixture at 0°C under pressure of 497.9 kPa (4.044 kg/cmG). These temperature and pressure correspond to a saturated state of R22. The upper one of the phase equilibrium lines 1 (corresponding to R22 at 0°C) is a saturated vapor line, and the lower one is a saturated liquid line. In the area between these two lines, the mixture is in the phase equilibrium state. The lines 2 are phase equilibrium lines of the mixture at 50°C under pressure of 1943.2 kPa (18.782 kg/cmG). These temperature and pressure correspond to a saturated state of R22.

As obvious from Fig. 3, when the composition range of R290 is limited to about 0 to about 10% by weight, the mixture comprising about 55 to about 75% by weight of R125, about 0 to about 10% by weight of R290 and about 25 to about 45% by weight of R134a is preferred, since it has substantially the same vapor pressure as R22 in the utilization temperature range between about 0°C and about 50°C and is fairly non-flammable. Further, when the mixing range of R290 is limited to about 0 to about 6% by weight, the mixture comprising about 55 to about 65% by weight of R125, about 0 to about 6% by weight of R290 and about 30 to about 45% by weight of R134a is more preferred, since it has substantially the same vapor pressure as R22 at all the utilizing temperatures between 0°C and 50°C and is substantially non-flammable.

The compositions of the working fluids at the points A₁ to F₁ in Fig. 3 are shown in Table 3.

**Table 3**

| Point | A₁ | B₁ | C₁ | D₁ | E₁ | F₁ |
|---|---|---|---|---|---|---|
| R125 (wt. %) | 65.6 | 65.3 | 64.6 | 56.4 | 56.6 | 56.8 |
| R290 (wt. %) | 2.1 | 3.2 | 6.0 | 4.6 | 3.5 | 2.2 |
| R134a (wt. %) | 32.4 | 31.5 | 29.4 | 39.0 | 39.9 | 41.0 |

The points A₁, B₁ and C₁ are on the saturated vapor line of the phase equilibrium lines 2 (corresponding to R22 at 50°C), and the points, D₁, E₁ and F₁ are on the saturated liquid line of the phase equilibrium lines 2. Further, all of them *are* in the area between the saturated vapor line and the saturated liquid line of the phase equilibrium lines 1 (corresponding to R22 to 0°C). Therefore, the mixture is in the phase equilibrium state at 0°C under pressure of 497.9 kPa (4.044 kg/cmG) which correspond to the saturated state of R22.

Thus, the working fluid having the composition in Table 1 is in the saturated state or the phase equilibrium state under the saturated vapor pressure condition of R22 at 0°C and 50°C, so that, in the utilization temperature range between about 0°C and about 50°C, the working fluid has substantially the same condensation and evaporation temperatures as R22 when operated under the saturated vapor pressure of R22 at said temperatures.

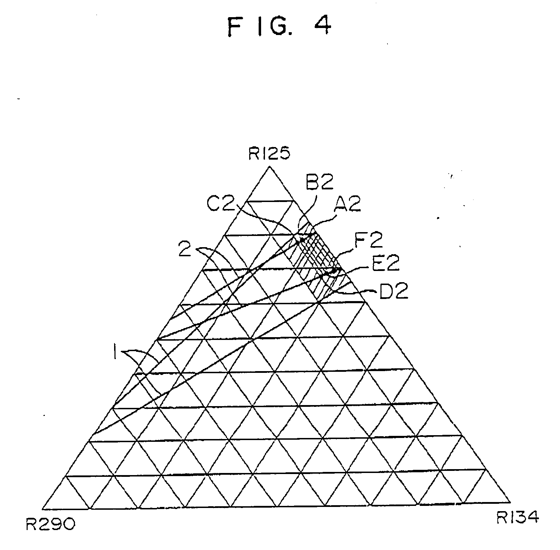

Fig. 4 shows a ternary composition diagram indicating equilibrium states of a mixture consisting of three kinds of hydrocarbons, i.e. R125, R290 and 1,1,2,2-tetrafluoroethane (R134) at specific temperatures under specific pressure in a triangular coordinate. In Fig. 4, the lines 1 are phase equilibrium lines of the mixture at 0°C under pressure of 497.9 kPa (4.044 kg/cmG), and the lines 2 are phase equilibrium lines of the mixture at 50°C under pressure of 1943.2 kPa (18.782 kg/cmG).

In that case, when the composition range of R290 is limited to about 0 to about 10% by weight, the mixture comprising about 60 to about 85% by weight of R125, about 0 to about about 10% by weight of R290 and about 15 to about 35% by weight of R134 is preferred, since it has substantially the same vapor pressure as R22 and is fairly non-flammable. Further, when the composition range of R290 is limited to about 0 to about 6% by weight, the mixture comprising about 70 to about 80% by weight of R125, about 0 to about 6% by weight of R290 and about 15 to about 30% by weight of R134 is more preferred.

The compositions of the working fluids at the points A₂ to F₂ in Fig. 4 are shown in Table 4.

**Table 4**

| Point | A₂ | B₂ | C₂ | D₂ | E₂ | F₂ |
|---|---|---|---|---|---|---|
| R125 (wt. %) | 79.3 | 78.5 | 78.0 | 68.0 | 68.6 | 69.2 |
| R290 (wt. %) | 2.4 | 3.8 | 4.8 | 5.3 | 4.1 | 2.6 |
| R134 (wt. %) | 18.3 | 17.7 | 17.2 | 26.7 | 27.3 | 28.2 |

The points A₂, B₂ and C₂ are on the saturated vapor line of the phase equilibrium lines 2 (corresponding to R22 at 50°C), and the points D₂, E₂ and F₂ are on the saturated liquid line of the phase equilibrium lines 2 (corresponding is R22 at 50°C). Further, all of them are in the area between the saturated vapor line and the saturated liquid line of the phase equilibrium lines 1 (corresponding to R22 at 0°C). Therefore, the mixture is in the phase equilibrium state at 0°C under pressure of 497.9 kPa (4.044 kg/cmG)(corresponding to the saturated state of R22).

Thus, the working fluid having the composition in Table 4 is in the saturated state or the phase equilibrium state under the saturated vapor pressure condition of R22 at 0°C and 50°C, so that, in the utilization temperature range between about 0°C and about 50°C, the working fluid has substantially the same condensation and evaporation temperatures as R22 when operated under the saturated vapor pressure of R22 at said temperatures.

In the above, the mixtures having the compositions on the phase equilibrium lines 2 (corresponding to R22 at 50°C) have been explained. In addition, when working fluids having compositions in the area inside the points A₂ to F₂, i.e. those having compositions which realize the phase equilibrium states at 0°C under pressure of 497.9 kPa (4.044 kg/cmG) and at 50°C under pressure of 1943.2 kPa (18.782 kg/cmG)(both corresponding to the saturated state of R22) are operated in the similar way to the above, condensation and evaporation temperatures which are substantially the same as those of R22 can be obtained in the utilization temperature range between about 0°C and about 50°C.

From Figs. 3 and 4, it is understood that the mixture comprising about 55 to about 80% by weight pentafluoroethane, about 0 to about 10% by weight of propane and about 15 to about 45% by weight of tetrafluoroethane is preferred, since it has substantially the same vapor pressure as R22 in the utilization temperature range between about 0°C and about 50°C and is fairly non-flammable. Further, the mixture comprising about 55 to about 80% by weight of pentafluoroethane, about 0 to about 6% by weight of propane and about 15 to about 45% by weight of tetrafluoroethane is more preferred, since it has substantially the same vapor pressure as R22 at all the utilizing temperatures between 0°C and 50°C and is substantially non-flammable.

Since non-flammable pentafluoroethane and tetrafluoroethane are selected as fluorinated halocarbons having substantially no ODP, flammability of propane which is selected as a hydrocarbon having substantially no ODP can be suppressed.

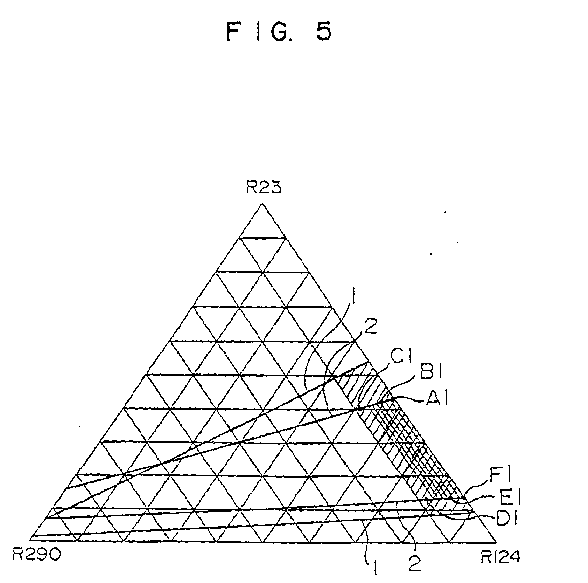

Fig. 5 shows a ternary composition diagram indicating equilibrium states of a mixture consisting of three kinds of hydrocarbons, i.e. trifluoromethane (R23), propane (R290) and 2-chloro-1,1,1,2-tetrafluoroethane (R124) at specific temperatures under specific pressure in a triangular coordinate.

The compositions of the working fluids at the points A₁ to F₂ in Fig. 5 are shown in Table 5.

**Table 5**

| Point | A₁ | B₁ | C₁ | D₁ | E₁ | F₁ |
|---|---|---|---|---|---|---|
| R23 (wt. %) | 42.6 | 41.7 | 39.7 | 13.4 | 13.8 | 13.9 |
| R290 (wt. %) | 0.7 | 3.3 | 9.5 | 8.5 | 2.9 | 0.6 |
| R124 (wt. %) | 56.7 | 55.0 | 50.8 | 78.1 | 83.3 | 85.5 |

In that case, when the composition range of R290 is limited to about 0 to about 10% by weight, the mixture comprising about 10 to about 55% by weight of R23, about 0 to about 10% by weight of R290 and about 40 to about 90% by weight of R124 is preferred, since it has substantially the same vapor pressure as R22 in the utilization temperature between about 0°C and about 50°C and is fairly non-flammable, and furthermore, when the composition range of R290 is limited to about 0 to about 6% by weight, the mixture comprising about 15 to about 45% by weight of R23, about 0 to about 6% by weight of R290 and about 55 to about 85% by weight of R124 is more preferred, since it has substantially the same vapor pressure as R22 in the utilization range between about 0°C and about 50°C and is substantially non-flammable.

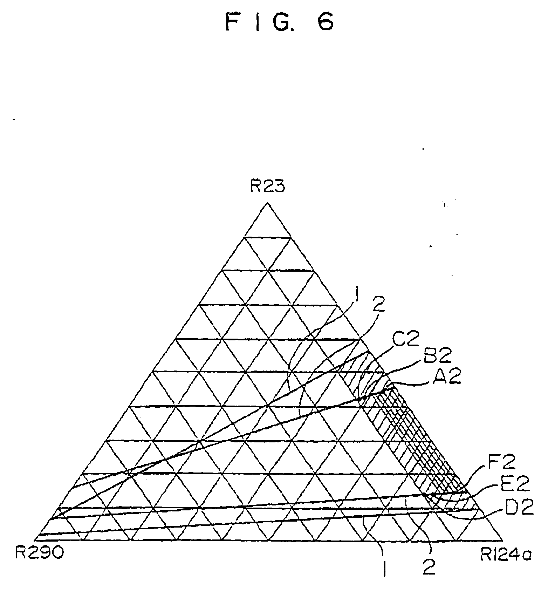

Fig. 6 shows a ternary composition diagram indicating equilibrium states of a mixture consisting of three kinds of hydrocarbons, i.e. R23, R290 and 1-chloro-1,1,2,2-tetrafluoroethane (R124a) at specific temperatures under specific pressure in a triangular coordinate.

The compositions of the working fluids at the points A₂ to F₂ in Fig. 6 are shown in Table 6.

**Table 6**

| Point | A₂ | B₂ | C₂ | D₂ | E₂ | F₂ |
|---|---|---|---|---|---|---|
| R23 (wt. %) | 44.5 | 42.3 | 42.0 | 13.0 | 13.9 | 14.3 |
| R290 (wt. %) | 2.9 | 9.1 | 9.9 | 9.6 | 8.1 | 2.5 |
| R124a (wt. %) | 52.6 | 48.6 | 48.1 | 76.6 | 78.0 | 83.2 |

In that case, when the composition range of R290 is limited to about 0 to about 10% by weight, the mixture comprising about 10 to about 55% by weight of R23, about 0 to about 10% by weight of R290 and about 40 to about 90% by weight of R124a is preferred, since it has substantially the same vapor pressure as R22 and is fairly non-flammable, and furthermore the mixture comprising about 15 to about 45% by weight of R23, about 0 to about 6% by weight of R290 and about 50 to about 85% by weight of R124a is more preferred.

From Figs. 5 and 6, it is understood that the mixture comprising about 10 to about 55% by weight trifluoromethane, about 0 to about 10% by weight of propane and about 40 to about 90% by weight of chlorotetrafluoroethane is preferred, since it has substantially the same vapor pressure as R22 in the utilization temperature range between about 0°C and about 50°C and is fairly non-flammable. Further, the mixture comprising about 15 to about 45% by weight of trifluoromethane, about 0 to about 6% by weight of propane and about 50 to about 85% by weight of chloro-tetrafluoroethane is more preferred, since it has substantially the same vapor pressure as R22 at all the utilizing temperatures between 0°C and 50°C and is substantially non-flammable.

Particularly, since nonflammable trifluoromethane and chlorotetrafluoroethane are selected as fluorinated halocarbons having substantially no ODP, flammability of propane which is selected as a hydrocarbon having substantially no ODP can be suppressed.

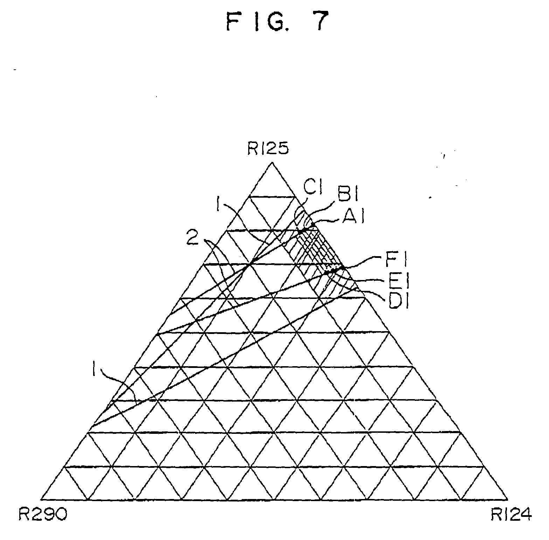

Fig. 7 shows a ternary composition diagram indicating equilibrium states of a mixture consisting of three kinds of hydrocarbons, i.e., pentafluoroethane (R125), propane (R290) and 2-chloro-1,1,1,2-tetrafluoroethane (R124) at specific temperatures under specific pressure in a triangular coordinate.

The compositions of the working fluids at the points A₁ to F₁ in Fig. 7 are shown in Table 7.

**Table 7**

| Point | A₁ | B₁ | C₁ | D₁ | E₁ | F₁ |
|---|---|---|---|---|---|---|
| R125 (wt. %) | 81.1 | 79.5 | 79.3 | 67.1 | 68.0 | 68.4 |
| R290 (wt. %) | 0.8 | 3.6 | 3.9 | 4.0 | 1.8 | 0.8 |
| R124 (wt. %) | 18.1 | 16.9 | 16.8 | 28.9 | 30.2 | 30.8 |

In that case when the composition range of R290 is limited to about 0 to about 10% by weight, the mixture comprising about 60 to about 85% by weight of R125, about 0 to about 10% by weight of R290 and about 10 to about 35% by weight of R124 is preferable, since it has substantially the same vapor pressure as R22 at a utilization temperature between about 0 and about 50°C and is fairly non-flammable. Furthermore, when the composition range of R290 is limited to about 0 to about 6% by weight, the mixture comprising about 65 to about 80% by weight of R125, about 0 to about 6% by weight of R290 and about 15 to about 30% by weight of R124 is more preferable, since it has substantially the same vapor pressure as R22 at all the utilization temperature between about 0 and about 50°C and is substantially non-flammable.

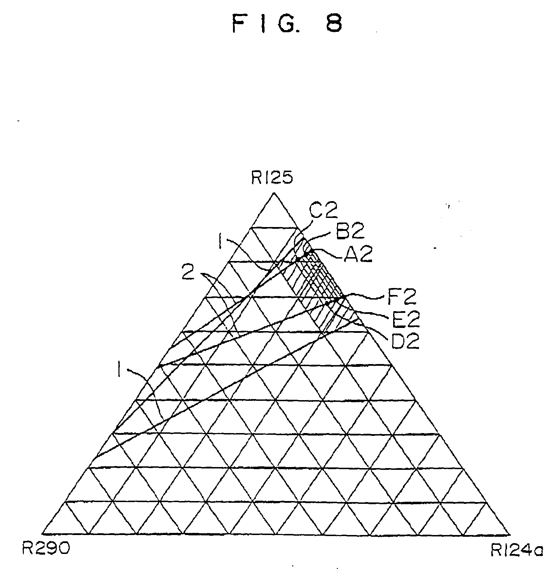

Fig. 8 shows a ternary composition diagram indicating equilibrium states of a mixture consisting of three kinds of hydrocarbons, i.e. R125, R290 and 1-chloro-1,1,2,2-tetrafluoroethane (R124a) at specific temperatures under specific pressure in a triangular coordinate.

The compositions of the working fluids at the points A₂ to F₂ in Fig. 8 are shown in Table 8.

**Table 8**

| Point | A₂ | B₂ | C₂ | D₂ | E₂ | F₂ |
|---|---|---|---|---|---|---|
| R125 (wt. %) | 82.2 | 81.6 | 80.6 | 68.1 | 68.8 | 69.2 |
| R290 (wt. %) | 1.4 | 2.3 | 3.9 | 4.1 | 2.4 | 1.4 |
| R124a (wt. %) | 16.4 | 16.1 | 15.5 | 27.8 | 28.8 | 29.4 |

In that case, when the composition range of R290 is limited to about 0 to about 10% by weight, the mixture comprising about 60 to about 85% by weight of R125, about 0 to about 10% by weight of R290 and about 10 to about 35% by weight of R124a is preferred, since it has substantially the same vapor pressure as R22 and is fairly non-flammable. Further, when the composition range of R290 is limited to about 0 to about 6% by weight, the mixture comprising about 70 to about 85% by weight of R125, about 0 to about 6% by weight of R290 and about 15 to about 30% by weight of R124a is more preferred.

From Figs. 7 and 8, it is understood that the mixture comprising about 60 to about 85% by weight of pentafluoroethane, about 0 to about 10% by weight of propane and about 10 to about 35% by weight of chlorotetrafluoroethane is preferred, since it has substantially the same vapor pressure as R22 in the utilization temperature range between about 0°C and about 50°C and is fairly non-flammable. Further, the mixture comprising about 65 to about 85% by weight of pentafluoroethane, about 0 to about 6% by weight of propane and about 15 to about 30% by weight of chlorotetrafluoroethane is more preferred, since it has substantially the same vapor pressure as R22 at all the utilizing temperatures between 0°C and 50°C and is substantially non-flammable.

Particularly, since nonflammable pentafluoroethane and chloro-tetrafluoroethane are selected as fluorinated halocarbons having substantially no ODP, flammability of propane which is selected as a hydrocarbon having substantially no ODP can be suppressed.

From the foregoing, it can be summarized that a working fluid comprising at least three kinds of hydrocarbons, that is, about 0% (for example, 0.1%) to 10% by weight of propane as a second component, one member selected from 5 to 55% by weight of trifluoromethane and 55 to 85% by weight of pentafluoroethane, each having a boiling point under the atmospheric pressure of not more than -40°C as a first component, and one member selected from 15 to 95% by weight of tetrafluoroethane and 10 to 90% by weight of chloro-tetrafluoroethane, each having a boiling point under the atmospheric pressure of -30°C to -10°C as a third component, sum total of three components being 100% by weight, is preferable, and a working fluid comprising at least three kinds of hydrocarbons, that is, about 0% (for example, 0.1% by weight) of propane as a second component, one member selected from 10 to 45% by weight of trifluoromethane and 55 to 85% by weight of pentafluoroethane as a first component, and one member selected from 15 to 90% by weight of tetrafluoroethane and 15 to 85% by weight of chlorotetrafluoroethane as a third component, sum total of the components being 100% by weight, is more preferable.

In the foregoing example, the working fluid preferably comprises three kinds of hydrocarbons, that is, propane (C₃H₈) as a second component, one member selected from non-flammable trifluoromethane (CHF₃) and pentafluoroethane (C₂HF₅) as a first component having a boiling point under the atmospheric pressure of not more than -40°C, and one member selected from tetrafluoroethane (C₂H₂F₄) and chlorotetrafluoroethane (C₂HClF₄) as a third component having a boiling point under the atmospheric pressure of not less than -30°C. It is, of course, possible to make a working fluid from a mixture of 4 or more kinds of hydrocarbons including their geometrical isomers. In that case, it is possible to contain difluoromethane (CH₂F₂; R32) or 1,1,1-trifluoroethane (C₂H₃F₃; R143a) having no flammable range and zero ODP as a first component having a boiling point under the atmospheric pressure of -40°C or 1,1-difluoroethane (C₂H₄F₂; R152a) having no flammable range and zero ODP as a third component having a boiling point under the atmospheric pressure of -30° to -10°C.

The mixture is a non-azeotropic mixture, which comprises three kinds of hydrocarbons having similar boiling points of not more than -10°C and has a gentle temperature gradient in the condensation and evaporation steps. Thus, even in apparatuses based on an air source, a Lorenz cycle, in which a temperature difference from the heat source is decreased, can be formed, and thus the present working fluid can be expected to have a higher coefficient of performance (COP) than that of R22. Furthermore, since the propane is at a low cost, the cost of the present mixture can be reduced and the oil-solubility of.the components can be improved to increase the heat transfer performance.

As is apparent from the foregoing, the present invention provide a working fluid made from a mixture comprising at least three kinds of hydrocarbons comprising 0.1 to 10% by weight of propane, one member selected from methane and ethane derivatives having a boiling point of not more than -40°C under the atmospheric pressure and consisting only of carbon atom(s), hydrogen atom(s) and fluorine atom(s) and one member selected from ethane derivatives having a boiling point of -30 to -10°C under the atmospheric pressure and containing carbon atoms, hydrogen atom(s) and fluorine atom(s), with a specific composition range, where the following effects can be obtained:
(1) The range for choice of working fluids having much less influence on the ozone layer in the stratosphere can be enlarged.
(2) Since nonflammable components are selected as fluorinated halocarbons having a very small ODP, flammability of propane, selected as a hydrocarbon having substantially no ODP, can be suppressed.
(3) Since the working fluid of the present invention has substantially the same vapor pressure as R22 at the utilization temperature of the apparatus, it can be used as a substitute working fluid for R22 in such apparatus.
(4) The working fluid of the present invention is a mixture of three components having similar boiling points under the atmospheric pressure of not more than -10°C and can be expected to have a high coefficient of performance with utilizing the temperature gradient of the non-azeotropic mixture, even in apparatuses based on an air source.
(5) Propane is at a low cost and thus a cost of the mixture can be reduced, and oil-solubility of the components can be improved to increase the heat transfer performance.
(6) Particularly, propane has zero ODP, and no substantial GWP, as compared with fluorinated halocarbons, and from this point of view, the present invention is useful.

## Claims

1. A working fluid based on at least three kinds of hydrocarbons, which comprises 0.1 to 10% by weight of propane as a second component, one member select from 5 to 55% by weight of trifluoromethane and 55 to 85% by weight of pentafluoroethane, each having a boiling point under the atmospheric pressure of not more than -40°C as a first component, and one member selected from 15 to 95% by weight of tetrafluoroethane and 10 to 90% by weight of chlorotetrafluoroethane, each having a boiling point under the atmospheric pressure of -30° to -10°C as a third component, sum total of the components being 100% by weight.

2. A working fluid according to Claim 1, wherein the second component is 0.1 to 6% by weight of propane, the first component is one member selected from 10 to 45% by weight of trifluoromethane and 55 to 85% by weight of pentafluoroethane, and the third component is one member selected from to 90% by weight of tetrafluoroethane and 15 to 85% by weight of chlorotetrafluoroethane.

3. A working fluid according to Claim 1, wherein the second component is not more than 10% by weight of propane, the first component is 5 to 50% by weight of trifluoromethane, and a third component is 45 to 95% by weight of tetrafluoroethane.

4. A working fluid according to Claim 3, wherein the second component is not more than 6% by weight of propane, the first component is 10 to 40% by weight of trifluoromethane, and the third component is 55 to 90% by weight of tetrafluoroethane.

5. A working fluid according to Claim 1, wherein the second component is not more than 10% by weight of propane, the first component is 55 to 85% by weight or pentafluoroethane, and the third component is 15 to 45% by weight of tetrafluoroethane.

6. A working fluid according to Claim 5, wherein the second component is not more than 6% by weight of propane, the first component is 55 to 80% by weight of pentafluoroethane, and the third component is 15 to 45% by weight of tetrafluoroethane.

7. A working fluid according to Claim 1, wherein the second component is not more than 10% by weight of propane, the first component is 10 to 55% by weight of trifluoromethane, and the third component is 40 to 90% by weight of chlorotetrafluoroethane.

8. A working fluid according to Claim 7, wherein the second component is not more than 6% by weight of propane, the first component is 15 to 45% by weight of trifluoromethane, and the third component is 50 to 85% by weight of chlorotetrafluoroethane.

9. A working fluid according to Claim 1, wherein the second component is not more than 10% by weight of propane, the first component is 60 to 85% by weight of pentafluoroethane, and the third component is 10 to 35% by weight of chlorotetrafluoroethane.

10. A working fluid according to Claim 9, wherein the second component is not more than 6% by weight of propane, the first component is 65 to 85% by weight of pentachloroethane and the third component is 15 to 30% by weight of chlorotetrafluoroethane.

11. A working fluid according to Claim 1, wherein the second component is 0.1 to 10% by weight of propane, the first component having a boiling point under the atmospheric pressure of not more than -40°C is one member selected from 5 to 55% by weight of trifluoromethane and 55 to 85% by weight of pentafluoroethane, and the third component having a boiling point under the atmospheric pressure of -30° to -10°C is one member selected from 15 to 95% by weight of tetrafluoroethane and 10 to 90% by weight of chlorotetrafluoroethane, the working fluid has substantially the same vapor pressure as chlorodifluoromethane.

12. A heat pump using a working fluid according to any of the preceding claims.

## Patentansprüche

1. Arbeitsfluid auf Grundlage von mindestens drei Kohlenwasserstoffarten, das aufweist 0,1 bis 10 Gew.-% Propan als zweite Komponente, einen Bestandteil, der ausgewählt ist aus 5 bis 55 Gew.-% Trifluoromethan und 55 bis 85 Gew.-% Pentafluoroäthan, die jeweils einen Siedepunkt bei Atmosphärendruck von nicht mehr als -40° C aufweisen, als erste Komponente und einen Bestandteil, der ausgewählt ist aus 15 bis 95 Gew.-% Tetrafluoroäthan und 10 bis 90Gew.-% Chlorotetrafluoroäthan, die jeweils einen Siedepunkt bei Atmosphärendruck von -30° bis -10° C aufweisen, als dritte Komponente, wobei die Gesamtsumme der Komponenten 100 Gew.-% beträgt.

2. Arbeitsfluid nach Anspruch 1, in dem die zweite Komponente 0,1 bis 6 Gew.-% Propan ist, die erste Komponente ein Bestandteil ist, der ausgewählt ist aus 10 bis 45 Gew.-% Trifluoromethan und 55 bis 85 Gew.-% Pentafluoroäthan, und die dritte Komponente ein Bestandteil ist, der ausgewählt ist aus 15 bis 90 Gew.-% Tetrafluoroäthan und 15 bis 85 Gew.-% Chlorotetrafluoroäthan.

3. Arbeitsfluid nach Anspruch 1, in dem die zweite Komponente Propan mit einem Anteil von nicht mehr als 10 Gew.-% ist, die erste Komponente 5 bis 50 Gew.-% Trifluoromethan ist und die dritte Komponente 45 bis 95 Gew.-% Tetrafluoroäthan ist.

4. Arbeitsfluid nach Anspruch 3, in dem die zweite Komponente Propan mit einem Anteil von nicht mehr als 6 Gew.-% ist, die erste Komponente 10 bis 40 Gew.-% Trifluoromethan ist und die dritte Komponente 55 bis 90 Gew.-% Tetrafluoroäthan ist.

5. Arbeitsfluid nach Anspruch 1, in dem die zweite Komponente Propan mit einem Anteil von nicht mehr als 10 Gew.-% ist, die erste Komponente 55 bis 85 Gew.-% Pentafluoroäthan ist und die dritte Komponente 15 bis 45 Gew.-% Tetrafluoroäthan ist.

6. Arbeitsfluid nach Anspruch 5, in dem die zweite Komponente Propan mit einem Anteil von nicht mehr als 6 Gew.-% ist, die erste Komponente 55 bis 80 Gew.-% Pentafluoroäthan ist und die dritte Komponente 15 bis 45 Gew.-% Tetrafluoroäthan ist.

7. Arbeitsfluid nach Anspruch 1, in dem die zweite Komponente Propan mit einem Anteil von nicht mehr als 10 Gew.-% ist, die erste Komponente 10 bis 55 Gew.-% Trifluoromethan ist und die dritte Komponente 40 bis 90 Gew.-% Chlorotetrafluoroäthan ist.

8. Arbeitsfluid nach Anspruch 7, in dem die zweite Komponente Propan mit einem Anteil von nicht mehr als 6 Gew.-% ist, die erste Komponente 15 bis 45 Gew.-% Trifluoromethan ist und die dritte Komponente 50 bis 85 Gew.-% Chlorotetrafluoroäthan ist.

9. Arbeitsfluid nach Anspruch 1, in dem die zweite Komponente Propan mit einem Anteil von nicht mehr als 10 Gew.-% ist, die erste Komponente 60 bis 85 Gew.-% Pentafluoroäthan ist und die dritte Komponente 10 bis 35 Gew.-% Chlorotetrafluoroäthan ist.

10. Arbeitsfluid nach Anspruch 9, in dem die zweite Komponente Propan mit einem Anteil von nicht mehr als 6 Gew.-% ist, die erste Komponente 65 bis 85 Gew.-% Pentachloroäthan ist und die dritte Komponente 15 bis 30Gew.-% Chlorotetrafluoroäthan ist.

11. Arbeitsfluid nach Anspruch 1, in dem die zweite Komponente 0,1 bis 10 Gew.-% Propan ist, die bei Atmosphärendruck einen Siedepunkt von nicht mehr als -40° C aufweisende erste Komponente ein Bestandteil ist, der ausgewählt ist aus 5 bis 55 Gew.-% Trifluoromethan und 55 bis 85 Gew.-% Pentafluoroäthan, und die bei Atmosphärendruck einen Siedepunkt von -30° bis -10° C aufweisende dritte Komponente ein Bestandteil ist, der ausgewählt ist aus 15 bis 95 Gew.-% Tetrafluoroäthan und 10 bis 90 Gew.-% Chlorotetrafluoroäthan, wobei das Arbeitsfluid im wesentlichen denselben Dampfdruck aufweist wie Chlorodifluoromethan.

12. Wärmepumpe, in der ein Arbeitsfluid nach einem der vorhergehenden Ansprüche eingesetzt wird.

## Revendications

1. Fluide moteur à base d'au moins trois sortes d'hydrocarbures, comprenant 0,1 à 10% en poids de propane en tant que deuxième composant, un élément choisi entre 5 à 55% en poids de trifluorométhane et 55 à 85% en poids de pentafluoroéthane, ayant chacun un point d'ébullition non supérieur à -40°C sous la pression atmosphérique, en tant que premier composant, et un élément choisi entre 15 à 95% en poids de tétrafluoroéthane et 10 à 90% en poids de chlorotétrafluoroéthane, ayant chacun un point d'ébullition de -30°C à -10°C sous la pression atmosphérique, en tant que troisième composant, la somme totale des composants étant de 100% en poids.

2. Fluide moteur selon la revendication 1, dans lequel le deuxième composant est constitué par 0,1 à 6% en poids de propane, le premier composant est un élément choisi entre 10 à 45% en poids de trifluorométhane et 55 à 85% en poids de pentafluoroéthane, et le troisième composant est un élément choisi entre 15 à 90% en poids de tétrafluoroéthane et 15 à 85% en poids de chlorotétrafluoroéthane.

3. Fluide moteur selon la revendication 1, dans lequel le deuxième composant est constitué par 10% en poids au maximum de propane, le premier composant est constitué par 5 à 50% en poids de trifluorométhane et le troisième composant est constitué par 45 à 95% en poids de tétrafluoroéthane.

4. Fluide moteur selon la revendication 3, dans lequel le deuxième composant est constitué par 6% en poids au maximum de propane, le premier composant est constitué par 10 à 40% en poids de trifluorométhane et le troisième composant est constitué par 55 à 90% en poids de tétrafluoroéthane.

5. Fluide moteur selon la revendication 1, dans lequel le deuxième composant est constitué par 10% en poids au maximum de propane, le premier composant est constitué par 55 à 85% en poids de pentafluoroéthane et le troisième composant est constitué par 15 à 45% en poids de tétrafluoroéthane.

6. Fluide moteur selon la revendication 5, dans lequel le deuxième composant est constitué par 6% en poids au maximum de propane, le premier composant est constitué par 55 à 80% en poids de pentafluoroéthane et le troisième composant est constitué par 15 à 45% en poids de tétrafluoroéthane.

7. Fluide moteur selon la revendication 1, dans lequel le deuxième composant est constitué par 10% en poids au maximum de propane, le premier composant est constitué par 10 à 55% en poids de trifluorométhane et le troisième composant est constitué par 40 à 90% en poids de chlorotétrafluoroéthane.

8. Fluide moteur selon la revendication 7, dans lequel le deuxième composant est constitué par 6% en poids au maximum de propane, le premier composant est constitué par 15 à 45% en poids de trifluorométhane et le troisième composant est constitué par 50 à 85% en poids de chlorotétrafluoroéthane.

9. Fluide moteur selon la revendication 1, dans lequel le deuxième composant est constitué par 10% en poids au maximum de propane, le premier composant est constitué par 60 à 85% en poids de pentafluoroéthane et le troisième composant est constitué par 10 à 35% en poids de chlorotétrafluoroéthane.

10. Fluide moteur selon la revendication 9, dans lequel le deuxième composant est constitué par 6% en poids au maximum de propane, le premier composant est constitué par 65 à 85% en poids de pentafluorooéthane et le troisième composant est constitué par 15 à 30% en poids de chlorotétrafluoroéthane.

11. Fluide moteur selon la revendication 1, dans lequel le deuxième composant est constitué par 0,1 à 10% en poids de propane, le premier composant ayant un point d'ébullition non supérieur à -40°C sous la pression atmosphérique est un élément choisi entre 5 à 55% en poids de trifluorométhane et 55 à 85% en poids de pentafluoroéthane, et le troisième composant ayant un point d'ébullition de -30°C à -10°C sous la pression atmosphérique est un élément choisi entre 15 à 95% en poids de tétrafluoroéthane et 10 à 90% en poids de chlorotétrafluoroéthane, le fluide moteur ayant pratiquement la même tension de vapeur que le chlorodifluorométhane.

12. Pompe à chaleur utilisant un fluide moteur selon l'une quelconque des revendications précédentes.
